# EUROPÄISCHE PATENTSCHRIFT

(11) **EP 3 119 848 B1**
(45) Veröffentlichungstag und Bekanntmachung des Hinweises auf die Patenterteilung: **07.10.2020**
(21) Anmeldenummer: 15712047.8
(22) Anmeldetag: 10.03.2015
(51) Int. Cl.: C09D 183/08, C09D 4/00, C23C 16/02

(54) **HYDROPHOBIERUNG VON HARTLACKIERUNGSOBERFLÄCHEN**
HYDROPHOBIZATION OF HARD COAT PAINT SURFACES
HYDROPHOBISATION DE SURFACES À LAQUAGE DUR

(30) Priorität: 19.03.2014 DE 102014003922
(43) Veröffentlichungstag der Anmeldung: 25.01.2017
(73) Patentinhaber: Rodenstock GmbH, 80687 München (DE)
(72) Erfinder: JUNG, Stefan, 82069 Hohenschäftlarn (DE); SEIDL, Stefan, 81677 München (DE)
(74) Vertreter: Müller-Boré & Partner Patentanwälte PartG mbB
(86) Internationale Anmeldenummer: PCT/EP2015/000534
(87) Internationale Veröffentlichungsnummer: WO 2015/139824

(56) Entgegenhaltungen:
- JP-A- H10 310 455
- US-A- 5 523 161
- US-A1- 2003 026 965

## Beschreibung

Die vorliegende Erfindung betrifft ein Verfahren zum Hydrophobieren von Hartlackierungsoberflächen sowie ein hartlackiertes Substrat mit hydrophobierter Oberfläche.

Verfahren zum Hydrophobieren von Glassubstraten, beispielsweise von ophthalmischen Linsen aus Glas, mit hydrolysierbaren Silanverbindungen sind seit langem bekannt. Bei derartigen Verfahren wird unter Bildung einer Si-O-Si-Bindung ein Silanylrest kovalent an die Glasoberfläche gebunden. Durch die apolaren Silanylreste, die an der Oberfläche des Glases gebunden sind, wird die Hydrophobie der Glasoberfläche erhöht. Dieses Verfahren setzt voraus, dass an der Oberfläche des Substrats, das hydrophobisiert werden soll, endständige Hydroxylgruppen oder Sauerstoffatome vorhanden sind. Bei Gläsern auf Silikatbasis ist dies gegeben. JP H10 310455 A offenbart ein Verfahren zum Hydrophobieren von Silicaoberflächen, wobei die Oberfläche zuerst durch Plasmaätzen und danach mit einer hydrolysierbaren polyfluorierten Silanverbindung behandelt wird, wodurch polyfluorierte Silanylreste kovalent an die Oberfläche gebunden werden.

Anders verhält es sich mit Substraten, die aus Materialien aufgebaut sind, die keine endständigen Hydroxylgruppen oder Sauerstoffatome aufweisen. Zu derartigen Substraten zählen beispielsweise solche, deren Oberfläche keine OH-Gruppen oder Sauerstoffatome aufweisen, insbesondere Substrate, deren Oberfläche von einer Kunststofflackierung ohne entsprechende Funktionalitäten gebildet wird. Bei dem Versuch, ein herkömmliches Hydrophobierungsverfahren auf ein derartiges Substrat anzuwenden, wird keine oder nur eine sehr geringe Erhöhung der Hydrophobie der Substrat- bzw. Hartlackierungsoberfläche beobachtet. Nachdem der hydrolysierbaren Silanverbindung kein geeigneter Reaktionspartner zur Verfügung steht, kommt es nicht zur Bildung einer kovalenten Bindung und die Hartlackierungsoberfläche bleibt unverändert.

In EP 2 270 071 A1 ist eine Acrylatverbindung beschrieben, die hydrophobe Gruppen aufweist und einer Hartlackzusammensetzung beigemengt werden kann, um eine Hartlackierung mit erhöhter Hydrophobie zu erhalten.

Somit liegt der vorliegenden Erfindung die Aufgabe zugrunde, ein Verfahren zum Hydrophobieren von Hartlackierungsoberflächen, wodurch eine Hartlackierungsoberfläche mit hoher Hydrophobie erzeugt werden kann, wobei die Hydrophobierung eine hohe Beständigkeit und Stabilität aufweisen soll, sowie ein hartlackiertes Substrat mit entsprechender hydrophober Oberfläche bereitzustellen.

Diese Aufgabe wird durch die in den Ansprüchen gekennzeichneten Ausführungsformen gelöst.

Insbesondere betrifft die vorliegende Erfindung ein Verfahren zum Hydrophobieren von Hartlackierungsoberflächen, wobei die Hartlackierung eine Polymermatrix und Nanoteilchen, die mindestens ein anorganisches Oxid umfassen, einschließt und zumindest teilweise auf der Oberfläche eines Substrats aufgebracht ist, wobei das Verfahren die folgenden Schritte umfasst:
- Plasmaätzen der Hartlackierungsoberfläche, um einen Teil der Polymermatrix selektiv abzutragen und zumindest einen Teil der Nanoteilchen partiell freizulegen, und
- Aufbringen einer Hydrophobierungszusammensetzung, die eine hydrolysierbare polyfluorierte Silanverbindung umfasst, auf die plasmageätzte Hartlackierung, wodurch polyfluorierte Silanylreste kovalent an die freigelegte Oberfläche der Nanoteilchen gebunden werden.

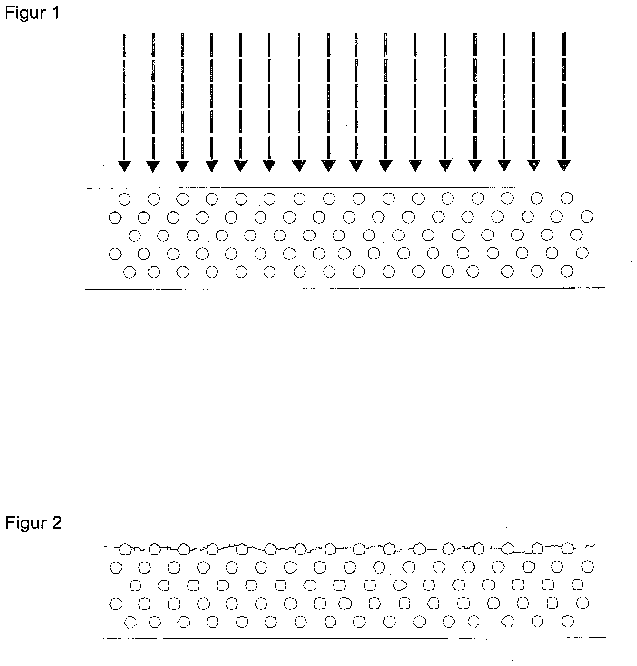

Erfindungsgemäß wird durch Plasmaätzen der Hartlackierungsoberfläche ein Teil der Polymermatrix selektiv abgetragen. "Selektiv abtragen" bedeutet in diesem Zusammenhang, dass durch das Plasmaätzen lediglich oder zumindest vorwiegend die Polymermatrix abgetragen wird, die darin vorhandenen Nanoteilchen jedoch nicht oder zumindest in weitaus geringerem Maß als die Polymermatrix. Somit ragt nach dem Plasmaätzen ein Teil der Nanoteilchen, die in der Hartlackierung vorhanden sind, über die Oberfläche der Polymermatrix hinaus. Die derart partiell freigelegten Nanoteilchen bleiben jedoch auch nach dem Plasmaätzen in der Polymermatrix verankert (siehe Figuren 1 und 2).

Der mit Nanoteilchen versetzte Lack besitzt nach dem Auftragen eine Anfangsrauigkeit. Wird dieser Lack dem erfindungsgemäßen Plasmaätzen ausgesetzt, so nimmt diese Rauigkeit zu, da nur der Lack geätzt wird, die Nanoteilchen hingegen nicht. Somit kann über die Plasmaparameter, wie beispielsweise Zeit oder Leistung, die Rauigkeit der Oberfläche individuell und gezielt eingestellt werden. Die Eigenschaften der Oberfläche, wie Reflektivität, können somit kontinuierlich verändert und auf den gewünschten Wert gebracht werden. Die partiell freigelegten Nanoteilchen erzeugen dabei eine Oberflächenstrukturierung mit reflexmindernder Eigenschaft, die zugleich eine hohe mechanische Abriebbeständigkeit aufweist. Durch das erfindungsgemäße Verfahren können somit Hartlackierungsoberflächen, die zugleich hydrophobe Eigenschaften und eine reduzierte Reflektivität aufweisen, bereitgestellt werden.

Für das erfindungsgemäße Verfahren reicht es aus, wenn zumindest ein gewisser Teil der in der Polymermatrix vorhandenen Nanoteilchen partiell freigelegt ist, damit zumindest ein Teil der Oberfläche der Hartlackierung von der freigelegten Oberfläche der Nanoteilchen eingenommen wird. Gemäß einer bevorzugten Ausführungsform der vorliegenden Erfindung enthält die Hartlackierung 5 bis 80 Gew.-%, bezogen auf die Gesamtmasse der ausgehärteten Hartlackierung, der Nanoteilchen, besonders bevorzugt 10 bis 50 Gew.-%, insbesondere bevorzugt 20 bis 30 Gew.-%. Vorzugsweise sind 10 bis 90 %, besonders bevorzugt 30 bis 70 %, der partiell freigelegten Nanoteilchen zu 10 bis 90 %, besonders bevorzugt 30 bis 70 %, bezogen auf die Gesamtoberfläche des Nanoteilchens, freigelegt. Innerhalb dieser Bereiche ist sowohl eine besonders große Oberfläche partiell freigelegter Nanoteilchen bereitgestellt als auch eine stabile Verankerung der partiell freigelegten Nanoteilchen in der Polymermatrix gewährleistet.

Gemäß einer bevorzugten Ausführungsform der vorliegenden Erfindung weisen die Nanoteilchen einen mittleren Teilchendurchmesser von 1 bis 100 nm, vorzugsweise 10 bis 80 nm, besonders bevorzugt 15 bis 65 nm auf. Der mittlere Teilchendurchmesser kann durch Auswertung einer rasterelektronenmikroskopischen (REM) Aufnahme einer Probe der Nanoteilchen bestimmt werden, beispielsweise durch händisches Ausmessen des Teilchendurchmessers von 10 zufällig bestimmten Nanoteilchen und Bilden des arithmetischen Mittels.

Die Nanoteilchen umfassen mindestens ein anorganisches Oxid. Vorzugsweise sind die Nanoteilchen aus einem oder mehreren mineralischen Metalloxiden aufgebaut. Gemäß einer bevorzugten Ausführungsform der vorliegenden Erfindung umfasst das anorganische Oxid mindestens eines von AI, Si, Zn, V, Sn, Sb, Zr, Y, Ta, Ti, In, Ca, Mg und/oder Ce. Vorzugsweise sind die Nanoteilchen aus einem oder mehreren Oxiden von Si, Ti, Zn, Va und Sb, beispielsweise aus Indiumzinnoxid (ITO), aufgebaut. Ein besonders bevorzugtes Oxid, aus dem die Nanoteilchen aufgebaut sein können, ist Siliciumdioxid.

Die Form der Nanoteilchen unterliegt keiner Einschränkung. Typischerweise liegen die Nanoteilchen in annähernd sphärischer Form vor.

Das Plasmaätzen unterliegt erfindungsgemäß keiner Einschränkung. Sämtliche aus dem Stand der Technik bekannten Standardprozesse zum Plasmaätzen können zum Einsatz kommen. Beim Plasmaätzen wird in einem Vakuumreaktor, der bis zu einem Druck von wenigen Millibar mit einem Ätzgas gefüllt ist, eine Hochfrequenz- oder elektrodenlose Mikrowellenentladung gezündet und so ein hochreaktives, ätzaktives Plasma erzeugt. Als Ätzgas eignen sich beispielsweise perfluorierte Kohlenwasserstoffe wie Tetrafluormethan, Hexafluorethan, Perfluorpropan, Perfluorbutadien sowie perfluorierte (Hetero)aromaten, Schwefelhexafluorid, Stickstoff(III)fluorid, Bortrichlorid, Chlor, Chlor- und Bromwasserstoff sowie Sauerstoff. Vorzugsweise wird Sauerstoff als Ätzgas verwendet. Erfindungsgemäß unterliegen die Parameter des Plasmaätzschritts wie Plasmaleistung, Sauerstofffluss, Druck und Ätzzeit, keiner besonderen Einschränkung. Das Plasmaätzen erfolgt vorzugsweise bei einer Plasmaleistung von 300 W bis 800 W. Der bevorzugte Sauerstofffluss liegt bei 50 sccm bis 300 sccm. Der Druck im Vakuumreaktor beträgt vorzugsweise 1 Pa bis 30 Pa. Bevorzugte Ätzzeiten liegen in einem Bereich von 1 bis 15 Minuten, besonders bevorzugt 3 bis 10 Minuten. Werden die Parameter des Plasmaätzens innerhalb dieser bevorzugten Bereiche gewählt, kann gewährleistet werden, dass 10 bis 90 %, besonders bevorzugt 30 bis 70 %, der partiell freigelegten Nanoteilchen zu 10 bis 90 %, besonders bevorzugt 30 bis 70 %, bezogen auf die Gesamtoberfläche des Nanoteilchens, freigelegt sind. Wie bereits vorstehend erläutert, kann dadurch gewährleistet werden, dass sowohl eine besonders große Oberfläche partiell freigelegter Nanoteilchen bereitgestellt als auch eine stabile Verankerung der partiell freigelegten Nanoteilchen in der Polymermatrix vorhanden ist.

Erfindungsgemäß wird nach dem Plasmaätzen eine Hydrophobierungszusammensetzung auf die plasmageätzte Hartlackierungsoberfläche aufgebracht. Die Hydrophobierungszusammensetzung umfasst mindestens eine hydrolysierbare polyfluorierte Silanverbindung sowie üblicherweise ein oder mehrere organische Lösemittel. "Hydrolysierbar" bedeutet in diesem Zusammenhang, dass die Silanverbindung mindestens eine Abgangsgruppe X aufweist, die an ein Siliciumatom gebunden ist und durch endständige Sauerstoffatome und/oder Hydroxylgruppen des anorganischen Oxids der Nanoteilchen und/oder Wassermoleküle substituiert werden kann. Mit dem Aufbringen der Hydrophobierungszusammensetzung auf die plasmageätzte Hartlackierungsoberfläche setzt eine entsprechende Substitutionsreaktion ein, wodurch die Abgangsgruppe X von der Silanverbindung abgespalten wird, wobei sich eine kovalente Bindung zu dem endständigen Sauerstoffatom des Oxids ausbildet. Alternativ dazu kann eine Abgangsgruppe X der Silanverbindung bereits vor Ausbildung der kovalenten Bindung zu der Hartlackierungsoberfläche abgespalten werden, beispielsweise durch Wasser oder einen Alkohol. (Wasser und/oder ein oder mehrere Alkohole können der Hydrophobierungszusammensetzung zugesetzt sein, oder auch über die Luftfeuchte in die Hydrophobierungszusammensetzung eintreten.) In diesem Fall wird die kovalente Bindung zwischen Silanylrest und endständigem Sauerstoffatom des anorganischen Oxids durch eine Wasser- oder Alkoholkondensationsreaktion gebildet. Erfindungsgemäß kann X somit auch Hydroxid oder ein Alkoholat sein. Durch die vorstehend beschriebene(n) Reaktion(en) werden polyfluorierte Silanylreste kovalent an die partiell freigelegte Oberfläche der Nanoteilchen, die aus der Oberfläche der Polymermatrix der Hartlackierung ragen, gebunden. Indem die Silanylreste eine kovalente Bindung zur freigelegten Oberfläche der Nanoteilchen ausbilden, wird eine sehr beständige und stabile Hydrophobierung erzeugt.

Das Aufbringen der Silanverbindung kann auf beliebige Weise erfolgen, zum Beispiel durch Sprühen, Pinseln, Rakeln, Tauchen, oder dadurch, dass ein Wattebausch, der zuvor mit der Hydrophobierungszusammensetzung getränkt wurde, mit der plasmageätzten Hartlackierungsoberfläche in Kontakt gebracht wird. Das Aufbringen kann auch mittels Spin/Dip-Coating, Drucken, Doktorblading bzw. CVD/PVD-Verfahren erfolgen.

Bevorzugte Abgangsgruppen X sind Hydroxid, Alkoholate, Chlorid, Bromid, lodid, Trifluormethansulfonat, Tosylat, Mesylat, Fluorsulfonat. Aufgrund ihrer zufriedenstellenden Reaktivität und der Wirtschaftlichkeit entsprechender Silanverbindungen ist die Abgangsgruppe X besonders bevorzugt Chlorid. Bevorzugte Alkoholate sind lineare C₁-C₄-Alkoholate, besonders bevorzugt Methanolat und Ethanolat.

Geeignete organische Lösemittel, die in der Hydrophobierungszusammensetzung verwendet werden können, sind perfluorierte Lösungsmittel, wobei Hydrofluorether bevorzugt ist. Falls vorhanden, enthält die Hydrophobierungszusammensetzung vorzugsweise 90 bis 99 Gew.-% eines oder mehrerer organischer Lösemittel. Darüber sollte die Hydrophobierungszusammensetzung wasserfrei sein, um Polymerisationsreaktionen der fluorierten Moleküle zu verhindern.

Vorzugsweise ist/sind zumindest 50 % der Wasserstoffatome jeder der nicht hydrolysierbaren Gruppe(n) (Rest(e) R in der nachstehenden Formel) der polyfluorierten Silanverbindung durch Fluoratome substituiert, besonders bevorzugt mindestens 75 %. Gemäß einer bevorzugten Ausführungsform der vorliegenden Erfindung ist/sind die nicht hydrolysierbare(n) Gruppe(n) der Silanverbindung perfluoriert. Durch einen hohen Fluorierungsgrad, bis hin zur Perfluorierung der nicht hydrolysierbaren Gruppe(n), kann durch das erfindungsgemäße Verfahren eine Hartlackierungsoberfläche mit besonders hoher Hydrophobie bereitgestellt werden. R ist nicht hydrolysierbar, das heißt hydrolysebeständig.

Gemäß einer bevorzugten Ausführungsform der vorliegenden Erfindung fällt die Silanverbindung unter die Formel RₙSiX₍₄₋ₙ₎, wobei n eine ganze Zahl von 1 bis 3 ist, R einen polyfluorierten Polyetherrest darstellt, X eine hydrolysierbare Gruppe darstellt, und verschiedene R und X, sofern vorhanden, unabhängig voneinander sind. Vorzugsweise ist n 2, besonders bevorzugt 1.

Vorzugsweise ist die Silanverbindung vernetzbar. Dies ist beispielsweise dann der Fall, wenn die Silanverbindung polykondensierbar ist. Dazu darf n in der vorstehend angegebenen Formel höchstens 2 betragen, da in diesem Fall eine Vernetzung der perfluorierten Silanylreste, die kovalent an die freigelegte Oberfläche der Nanoteilchen gebunden sind, möglich ist. Bei dieser Vernetzung werden durch Kondensation zweier Si-OH-Gruppen Si-O-Si-Bindungen gebildet. Dadurch kann eine Hydrophobierung mit noch höherer Beständigkeit bereitgestellt werden. Beispielhaft können Trichlorsilane oder Trialkoxysilane wie Trimethoxysilane oder Triethoxysilane eingesetzt werden. Andere vernetzbare Silane sind beispielsweise Acryloxysilane oder Glycidoxysilane.

Der poly- oder perfluorierte Polyetherrest kann ein verzweigtkettiges oder geradkettiges Molekülgerüst aufweisen, vorzugsweise ist der polyfluorierte Polyetherrest geradkettig. Darüber hinaus ist es bevorzugt, dass der Polyetherrest Wiederholungseinheiten der Formel -[CₖFₗH₍₂ₖ₋ₗ₎O]- aufweist. Dabei ist k eine ganze Zahl von 1 bis 6, vorzugsweise 2 bis 4, insbesondere bevorzugt 2. Verschiedene k innerhalb einer Polyetherkette sind unabhängig voneinander, allerdings nimmt k innerhalb einer Polyetherkette vorzugsweise einen konstanten Wert ein. Die ganze Zahl I beträgt mindestens 1, bevorzugt mindestens k, besonders bevorzugt mindestens eine ganze Zahl > 1,5 k, insbesondere bevorzugt gilt I = 2k. Vorzugsweise ist der Polyetherrest perfluoriert.

Auf die Abgangsgruppe X wurde vorstehend bereits eingegangen. Vorzugsweise ist zwischen jedem der Reste R und Si eine C-Si-Bindung ausgebildet. Es ist zwar auch möglich, dass der Rest R über eine O-Si-Bindung an das Siliciumatom der Silanverbindung gebunden ist, allerdings ist ein derart gebundener Rest R selbst hydrolyseempfindlich. In einem solchen Fall weist die Abgangsgruppe X vorzugsweise eine höhere Güte (d. h. eine höhere Reaktivität) auf als der Rest R. Dies ist insbesondere für die vorstehend angegebenen bevorzugten Abgangsgruppen X der Fall.

Gemäß einer bevorzugten Ausführungsform der vorliegenden Erfindung weist die Silanverbindung ein Molekulargewicht von 500 bis 10000 g/mol, bevorzugt 1000 bis 6000, besonders bevorzugt 1500 bis 3000 auf.

Die vorstehend beschriebene Bildung einer kovalenten Bindung zwischen der freigelegten Oberfläche der Nanoteilchen und den Silanylresten sowie die gegebenenfalls stattfindende Vernetzungsreaktion unter Bildung von Si-O-Si-Bindungen können prinzipiell bereits bei niedriger Temperatur, wie beispielsweise 10 °C oder Raumtemperatur (25°C), erfolgen. Allerdings lassen sich beide Reaktionen durch das Erwärmen der plasmageätzten Hartlackierungsoberfläche, auf welche die Hydrophobierungszusammensetzung aufgebracht worden ist, beschleunigen. Daher erfolgt vorzugsweise nach dem Aufbringen der Hydrophobierungszusammensetzung ein Schritt des Temperns, vorzugsweise für eine Dauer von 15 Minuten bis 24 Stunden, besonders bevorzugt 1 bis 3 Stunden, bei einer Temperatur von 40 bis 120°C, vorzugsweise 40°C bis 80°C, besonders bevorzugt 50 bis 70°C. Eine relative Feuchtigkeit von 60 bis 80% verbessert und beschleunigt diese Kopplung, da die Wassermoleküle die Bindung der Silangruppen an den Hydroxylgruppen begünstigen.

Alternativ oder ergänzend zum Tempern kann die Reaktion zwischen Nanoteilchenoberfläche und Silanverbindung sowie Vernetzung der Silanylreste durch UV-Bestrahlung erfolgen.

Gemäß einer bevorzugten Ausführungsform der vorliegenden Erfindung erfolgt nach dem Tempern ein Waschschritt, in dem das Substrat mindestens einmal mit Wasser und/oder einem organischen Lösemittel, wie Aceton, Ethanol, Essigsäureethylester, Hexan oder Waschbenzin, abgespült wird, wobei gegebenenfalls ein grenzflächenaktives Mittel zugegeben werden kann. Vorzugsweise werden Wasser, Alkohole sowie Gemische daraus verwendet. Als grenzflächenaktives Mittel kann beispielsweise Pricol®, ein handelsübliches Geschirrspülmittel, verwendet werden.

Gemäß einer bevorzugten Ausführungsform der vorliegenden Erfindung erfolgen vor dem Plasmaätzen die Schritte des Bereitstellens des Substrats, des Aufbringens einer Hartlackzusammensetzung auf zumindest einen Teil der Substratoberfläche, und des Aushärtens der Hartlackzusammensetzung unter Bildung der Hartlackierung. Dabei umfasst die Hartlackzusammensetzung einen Polymerlack, wobei die Nanoteilchen in der Hartlackzusammensetzung dispergiert sind.

Gemäß der vorliegenden Erfindung unterliegt das Substrat keiner besonderen Einschränkung. Vorzugsweise ist das Substrat transparent. Transparent bedeutet in diesem Zusammenhang, dass die Transmission des Substratmaterials bei einer Schichtdicke von 1 cm mindestens 80 % beträgt. Gemäß einer bevorzugten Ausführungsform ist das Substrat aus Glas oder Kunststoff aufgebaut, wobei Kunststoff ein besonders bevorzugtes Substratmaterial darstellt. Geeignete Kunststoffe umfassen die gemäß dem Stand der Technik üblicherweise, insbesondere für ophthalmische Zwecke, verwendbaren Kunststoffe. Beispielsweise kann das Substrat aus Poly(C₁-C₁₂-alkyl)methacrylaten, Polyoxyalkylenmethacrylaten, Polyalkoxyphenolmethacrylaten, Celluloseacetat, Cellulosetriacetat, Celluloseacetatpropionat, Celluloseacetatbutyrat, Polyvinylacetat, Polyvinylalkohol, Polyvinylchlorid, Polyvinylidenchlorid, Polycarbonaten, Polyestern, Polyurethanen, Polyethylenterephthalat, Polystyrol, Poly-α-methyl-styrol, Polyvinylbutyral, Copoly(styrol-methylmethacrylat), Copoly(styrol-acrylnitril) und Polymeren aus Bestandteilen der Gruppe, bestehend aus Polyol(allyl-carbonat)monomeren, polyfunktionalen Acrylat-, Methacrylat- oder Diethylenglycoldimethacrylatmonomeren, ethoxylierten Bisphenol-A-dimethacrylatmonomeren, Diisopropenylbenzolmonomeren, Ethylenglycolbismethacrylatmonomeren, Poly(ethylenglycol)-bismethacrylatmonomeren, ethoxylierten Phenolmethacrylatmonomeren, alkoxylierten Polyalkoholacrylatmonomeren und Diallylidenpentaerythritmonomeren oder Gemischen davon, ausgewählt sein.

Insbesondere kann das Substrat aus einem festen, transparenten Homo- oder Copolymer, ausgewählt aus der Gruppe, bestehend aus Poly(methylmethacrylat), Poly(ethylenglycolbismethacrylat), poly(ethoxyliertem Bisphenol-A-dimethacrylat), thermoplastischem Polycarbonat, Polyvinylacetat, Polyvinylbutyral, Polyurethan oder einem Polymer, ausgewählt aus den Bestandteilen der Gruppe, bestehend aus Diethylenglycolbis(allylcarbonat)monomeren, Diethylenglycoldimethacrylatmonomeren, ethoxylierten Phenolmethacrylatmonomeren, ethoxylierten Diisopropenylbenzolmonomeren und ethoxylierten Trimethylolpropantriacrylatmonomeren, aufgebaut sein.

Gemäß einer weiteren bevorzugten Ausführungsform der vorliegenden Erfindung ist das Substrat ein ophthalmischer Kunststoff, beispielsweise eine ophthalmische Linse aus Kunststoff, der bevorzugt aus einem oder einem Gemisch der vorstehend aufgeführten Polymere ausgewählt ist.

Obwohl die Hartlackzusammensetzung lediglich auf einen Teil der Substratoberfläche aufgebracht werden kann, erfolgt das Aufbringen der Hartlackzusammensetzung vorzugsweise auf der gesamten Oberfläche des Substrats. Entsprechend ist das hartlackierte Substrat vor dem Plasmaätzen vorzugsweise vollständig mit der Hartlackierung bedeckt.

Die Hartlackzusammensetzung kann auf beliebige Weise auf das unlackierte Substrat aufgebracht werden. Geeignete Verfahren zum Hartlackieren sind dem Fachmann bekannt und umfassen beispielsweise Spin/Dip-Coating, Drucken, Doktorblading bzw. CVD/PVD-Verfahren.

Die Nanoteilchen liegen sowohl in der Hartlackzusammensetzung als auch in der ausgehärteten Hartlackierung gleichmäßig verteilt vor. Dazu werden die Nanoteilchen in der Hartlackzusammensetzung durch übliche Dispergierungsverfahren agglomerisationsfrei dispergiert.

Gemäß einer bevorzugten Ausführungsform der vorliegenden Erfindung ist die Polymermatrix aus mindestens einem Polymer, ausgewählt aus Poly(meth)acrylaten, Polyurethanen, Polyurethanacrylaten, Polysiloxanen (Sol-Gel Systeme/Coatings), Lacken auf Epoxidlackbasis und Derivaten davon, aufgebaut. Neben den darin gleichmäßig verteilten Nanoteilchen umfasst die Hartlackzusammensetzung daher einen Polymerlack, welcher ein entsprechendes Monomer(gemisch) umfasst, sodass sich während des Aushärtens der Hartlackzusammensetzung durch Polymerisation dieses Monomer(gemische)s die Hartlackierung bildet. Gegebenenfalls umfasst die Hartlackzusammensetzung/der Polymerlack auch ein oder mehrere organische Lösemittel.

Das Aushärten der Hartlackzusammensetzung unterliegt keinen besonderen Einschränkungen und kann sowohl bei Normalbedingungen als auch unter Erwärmen auf eine Temperatur oberhalb von 25°C und/oder durch UV-Bestrahlung erfolgen. Geeignete Bedingungen für das Aushärten der Hartlackzusammensetzung sind dem Fachmann bekannt.

In einem weiteren Aspekt betrifft die vorliegende Erfindung ein hartlackiertes Substrat mit hydrophobierter Oberfläche, welches ein Substrat, dessen Oberfläche zumindest teilweise mit einer Hartlackierung bedeckt ist, umfasst, wobei die Hartlackierung eine Polymermatrix und Nanoteilchen, die mindestens ein Metalloxid umfassen, einschließt, wobei zumindest ein Teil der Nanoteilchen an der Hartlackierungsoberfläche partiell freigelegt ist, und wobei polyfluorierte Silanylreste kovalent an die freigelegte Oberfläche der Nanoteilchen gebunden sind. Die kovalent gebundenen Silanylreste sind vorzugsweise vernetzt, wodurch eine besonders hohe Beständigkeit der Hydrophobierung gewährleistet ist.

Gemäß einer bevorzugten Ausführungsform weist die hydrophobierte hartlackierte Oberfläche des erfindungsgemäßen Substrats einen Kontaktwinkel gegen Wasser von mindestens >80°, vorzugsweise >90°, besonders bevorzugt >100° auf. Der Kontaktwinkel gegen Hexan beträgt vorzugsweise mindestens >50°, besonders bevorzugt mindestens >60°. Der Kontaktwinkel gegen Hexan beziehungsweise Wasser kann mittels "sessile drop drop-shape Analysis" (DSA) gemessen werden.

Ein derartiges hydrophobiertes hartlackiertes Substrat kann durch das erfindungsgemäße Verfahren, wie vorstehend beschrieben, bereitgestellt werden.

Die vorliegende Erfindung wird anhand des folgenden, nicht einschränkenden Beispiels näher erläutert.

### Beispiel:

Als Substrat diente ein ophthalmischer Kunststoffgegenstand aus Poly-Diethylenglykol-bisallylcarbonat (Brechungsindex n = 1,5) mit einer etwa 2 bis 3 µm dicken Duralux® Hartlackierung, welche die gesamte Oberfläche des Substrates bedeckte. Der Gegenstand wurde zunächst in einer Vakuumkammer Actiplas® für eine Dauer von 5 Minuten bei einer Plasmaleistung von 500 Watt in einer Sauerstoffatmosphäre plasmageätzt.

Danach wurde die Hydrophobierungszusammensetzung durch Abreiben eines damit getränkten Wattebausches auf der plasmageätzten Oberfläche des Substrats aufgebracht.

Die Hydrophobierungszusammensetzung basierte auf dem Produkt Mirage Premium AR Super Hydrophobic Solution der Firma Satisloh. Das Lösungsmittel war HFE, bezogen von 3M. Das Molekulargewicht der Silanverbindung betrug etwa 2000 g/mol.

Das plasmageätzte Substrat, auf das die Hydrophobierungszusammensetzung aufgebracht worden war, wurde danach für eine Dauer von 2 Stunden bei 60°C in einem Trockenschrank getempert.

Nach beendetem Tempern wurde das Glas mehrmals mit Ethanol beziehungsweise einem Gemisch aus Ethanol/Wasser/Pricol® gewaschen.

Als Vergleichsbeispiel wurde das gleiche Verfahren mit einem weiteren ophthalmischen Glas des selben Typs durchgeführt, wobei hier das Plasmaätzen weggelassen wurde.

Zur Überprüfung der Hydrophobierung wurde mit einem Filzstift (Edding 8300 Industry Permanent Marker Special) eine mäanderförmige Linie auf jede der Oberflächen des Beispielglases und des Vergleichsbeispielglases aufgebracht. Die Oberfäche des erfindungsgemäßen Beispielglases wurde aufgrund dessen erhöhter Hydrophobie nicht von der Tinte des Filzstiftes benetzt. Es bildete sich ein Muster perlenkettenartig aufgereihter Tintentröpfchen. Auf der Oberfläche des Vergleichsbeispielglases trat dieser Effekt nicht auf. Die Tinte benetzte hier die Oberfläche, sodass ein breiter Strich zu erkennen war.

Die erhöhte Hydrophobie des Beispielglases wurde darüber hinaus durch Kontaktwinkelmessungen gemäß "sessile drop drop-shape Analysis" (DSA) bestätigt. Die entsprechenden Ergebnisse sind in der folgenden Tabelle zusammengefasst.

**Tabelle 1: Kontaktwinkelmessung**

| | Wasser | Hexadekan |
|---|---|---|
| Duralux® 1,5 unbehandelt | 73° | 26° |
| Duralux® 1,5 erfindungsgemäß | 102° | 64° |

Durch das erfindungsgemäße Verfahren können hartlackierte Substrate, die gleichzeitig eine hydrophobe Oberfläche sowie eine geringe Reflektivität aufweisen, besonders effizient und wirtschaftlich bereitgestellt werden. Die Hydrophobierung der erfindungsgemäßen hartlackierten Substrate weist eine hohe Beständigkeit auf und kann effizient und wirtschaftlich auf Grundlage kostengünstiger Ausgangsmaterialien erzeugt werden. Nachdem durch das erfindungsgemäße Hydrophobierungsverfahren auch reflexmindernde Eigenschaften erzeugt werden, kann auf eine zusätzliche Entspiegelung des Substrats verzichtet werden.

## Patentansprüche

1. Verfahren zum Hydrophobieren von Hartlackierungsoberflächen, wobei die Hartlackierung eine Polymermatrix und Nanoteilchen, die mindestens ein anorganisches Oxid umfassen, einschließt und zumindest teilweise auf der Oberfläche eines Substrats aufgebracht ist,
wobei das Verfahren die folgenden Schritte umfasst:
- Plasmaätzen der Hartlackierungsoberfläche, um einen Teil der Polymermatrix selektiv abzutragen und zumindest einen Teil der Nanoteilchen partiell freizulegen, und
- Aufbringen einer Hydrophobierungszusammensetzung, die eine hydrolysierbare polyfluorierte Silanverbindung umfasst, auf die plasmageätzte Hartlackierung, wodurch polyfluorierte Silanylreste kovalent an die freigelegte Oberfläche der Nanoteilchen gebunden werden.

2. Verfahren nach Anspruch 1, worin vor dem Plasmaätzen die Schritte
- Bereitstellen des Substrats,
- Aufbringen einer Hartlackzusammensetzung auf zumindest einen Teil der Substratoberfläche, und
- Aushärten der Hartlackzusammensetzung unter Bildung der Hartlackierung,
erfolgen, und
wobei die Hartlackzusammensetzung einen Polymerlack umfasst, und wobei die Nanoteilchen in der Hartlackzusammensetzung dispergiert sind.

3. Verfahren nach Anspruch 1 oder 2,
wobei das Substrat aus Glas oder Kunststoff besteht.

4. Verfahren nach einem der Ansprüche 1 bis 3
wobei das Substrat ein ophthalmischer Kunststoffgegenstand ist.

5. Verfahren nach einem der Ansprüche 1 bis 4,
wobei das anorganische Oxid mindestens eines von Al, Si, Zn, V, Sn, Sb, Zr, Y, Ta, Ti, In, Ca, Mg und/oder Ce umfasst.

6. Verfahren nach einem der Ansprüche 1 bis 5,
wobei die Nanoteilchen einen mittleren Teilchendurchmesser von 1 bis 100 nm aufweisen.

7. Verfahren nach einem der Ansprüche 1 bis 6,
wobei die Polymermatrix aus mindestens einem Polymer, ausgewählt aus Poly(meth)acrylaten, Polyurethanen, Polyurethanacrylaten, Polysiloxanen, Lacken auf Epoxidlackbasis und Derivaten davon, aufgebaut ist.

8. Verfahren nach einem der Ansprüche 1 bis 7,
wobei die Nanoteilchen 5 bis 80 Gew.-% der Hartlackzusammensetzung ausmachen.

9. Verfahren nach einem der Ansprüche 1 bis 8, wobei die Silanverbindung unter die Formel RnSiX₍₄₋ₙ₎ fällt,
wobei n eine ganze Zahl von 1 bis 3 ist, R einen polyfluorierten Polyetherrest darstellt, X eine hydrolysierbare Gruppe darstellt, und
verschiedene R und X, sofern vorhanden, unabhängig voneinander sind.

10. Verfahren nach einem der Ansprüche 1 bis 9,
wobei die Silanverbindung eine Molekulargewicht von 500 bis 10000 g/mol aufweist.

11. Hartlackiertes Substrat mit hydrophobierter Oberfläche, welches
ein Substrat, dessen Oberfläche zumindest teilweise mit einer Hartlackierung bedeckt ist, wobei die Hartlackierung eine Polymermatrix und Nanoteilchen, die mindestens ein Metalloxid umfassen, einschließt,
umfasst,
wobei zumindest ein Teil der Nanoteilchen an der Hartlackierungsoberfläche partiell freigelegt ist, und
wobei polyfluorierte Silanylreste kovalent an die freigelegte Oberfläche der Nanoteilchen gebunden sind.

## Claims

1. A method for hydrophobing hard lacquer surfaces, wherein the hard lacquer includes a polymer matrix and nanoparticles, which comprise at least one inorganic oxide and is at least partially applied to the surface of a substrate,
the method comprising the following steps:
- plasma etching of the hard lacquer surface in order to selectively remove one part of the polymer matrix and partially expose at least one part of the nanoparticles, and
- application of a hydrophobing composition comprising a hydrolysable polyfluorinated silane compound to the plasma-etched hard lacquer, whereby polyfluorinated silanyl residues are covalently bonded to the exposed surface of the nanoparticles.

2. The method of claim 1 wherein prior to plasma etching the steps
- providing the substrate,
- applying a hard lacquer composition to at least part of the substrate surface, and
- curing of the hard coating composition with formation of the hard coating,
take place, and
wherein the hard lacquer composition comprises a polymer lacquer, and wherein the nanoparticles are dispersed in the hard lacquer composition.

3. The method according to claim 1 or 2, wherein the substrate consists of glass or plastic.

4. The method according to any one of claims 1 to 3, wherein the substrate is an ophthalmic plastic article.

5. The method according to any one of claims 1 to 4,
wherein the inorganic oxide comprises at least one of Al, Si, Zn, V, Sn, Sb, Zr, Y, Ta, Ti, In, Ca, Mg and / or Ce.

6. The method according to any one of claims 1 to 5,
wherein the nanoparticles have an average particle diameter of 1 to 100 nm.

7. The method according to any one of claims 1 to 6,
wherein the polymer matrix is composed of at least one polymer selected from poly (meth) acrylates, polyurethanes, polyurethane acrylates, polysiloxanes, lacquer based on epoxy lacquers and derivatives thereof.

8. The method according to any one of claims 1 to 7, wherein the nanoparticles make up 5 to 80 wt.-% of the hard coating composition.

9. The method according to any one of claims 1 to 8, wherein the silane compound falls under the formula RₙSiX₍₄₋ₙ₎,
where n is an integer from 1 to 3, R is a polyfluorinated polyether radical, X is a hydrolyzable group, and
different R and X, if any, are independent of one another.

10. The method according to any one of claims 1 to 9, wherein the silane compound has a molecular weight of 500 to 10,000 g / mol.

11. Hard-coated substrate with a hydrophobic surface, which
comprises a substrate, the surface of which is at least partially covered with a hard coating, the hard coating including a polymer matrix and nanoparticles comprising at least one metal oxide,
wherein at least a portion of the nanoparticles is partially exposed on the hard coating surface, and
wherein polyfluorinated silanyl residues are covalently bound to the exposed surface of the nanoparticles.

## Revendications

1. Procédé d'hydrophobisation de surfaces de laque dure, dans lequel la laque dure comprend une matrice polymère et des nanoparticules qui comprennent au moins un oxyde inorganique et est au moins partiellement appliquée sur la surface d'un substrat, le procédé comprenant les étapes suivantes:
- gravure au plasma de la surface de la laque dure afin d'éliminer sélectivement une partie de la matrice polymère et d'exposer partiellement au moins une partie des nanoparticules, et
- application d'une composition hydrophobe comprenant un composé silane polyfluoré hydrolysable sur la laque dure gravée par plasma, grâce à quoi des résidus silanyle polyfluorés sont liés de manière covalente à la surface exposée des nanoparticules.

2. Procédé selon la revendication 1, dans lequel avant la gravure au plasma, les étapes
- fournir le substrat,
- appliquer une composition de laque dure sur au moins une partie de la surface du substrat, et
- durcissement de la composition de revêtement dur avec formation du revêtement dur, ont lieu, et
dans lequel la composition de laque dure comprend une laque polymère, et dans lequel les nanoparticules sont dispersées dans la composition de laque dure.

3. Procédé selon la revendication 1 ou 2, dans lequel le substrat est en verre ou en plastique.

4. Procédé selon l'une quelconque des revendications 1 à 3, dans lequel le substrat est un article en matière plastique ophtalmique.

5. Procédé selon l'une quelconque des revendications 1 à 4,
dans lequel l'oxyde inorganique comprend au moins l'un parmi Al, Si, Zn, V, Sn, Sb, Zr, Y, Ta, Ti, In, Ca, Mg et / ou Ce.

6. Procédé selon l'une quelconque des revendications 1 à 5,
dans lequel les nanoparticules ont un diamètre moyen de particules de 1 à 100 nm.

7. Procédé selon l'une quelconque des revendications 1 à 6,
dans lequel la matrice polymère est composée d'au moins un polymère choisi parmi les poly (méth) acrylates, les polyuréthanes, les polyuréthanes acrylates, les polysiloxanes, la laque à base de laques époxy et leurs dérivés.

8. Procédé selon l'une quelconque des revendications 1 à 7, dans lequel les nanoparticules constituent 5 à 80% en poids de la composition de revêtement dur.

9. Procédé selon l'une quelconque des revendications 1 à 8, dans lequel le composé silane relève de la formule RₙSiX₍₄₋ₙ₎,
où n est un entier de 1 à 3, R est un radical polyéther polyfluoré, X est un groupe hydrolysable, et
différents R et X, le cas échéant, sont indépendants l'un de l'autre.

10. Procédé selon l'une quelconque des revendications 1 à 9, dans lequel le composé silane a un poids moléculaire de 500 à 10 000 g / mol.

11. Substrat à revêtement dur avec une surface hydrophobe, qui
comprend un substrat dont la surface est au moins partiellement recouverte d'un revêtement dur, le revêtement dur comprenant une matrice polymère et des nanoparticules comprenant au moins un oxyde métallique,
dans lequel au moins une partie des nanoparticules est partiellement exposée sur la surface de revêtement dur, et
dans lequel les résidus de silanyle polyfluoré sont liés de manière covalente à la surface exposée des nanoparticules.
